# EUROPEAN PATENT APPLICATION

(11) **EP 4 309 763 A1**
(43) Date of publication of application: **24.01.2024**
(21) Application number: 23178156.8
(22) Date of filing: 08.06.2023
(51) Int. Cl.: B01D 53/00

(54) **PURIFICATION OF OFFGAS**

(30) Priority: 14.06.2022 DE 102022114977
(71) Applicant: L'AIR LIQUIDE, SOCIETE ANONYME POUR L'ETUDE ET L'EXPLOITATION DES PROCEDES GEORGES CLAUDE, 75007 Paris (FR); Air Liquide Deutschland GmbH, 40235 Düsseldorf (DE)
(72) Inventor: JAGEMANN, Johannes, 47805 Krefeld (DE); BROUNS, Marcel, 40805 Krefeld (DE)
(74) Representative: Air Liquide

(57) **Abstract**

Process for purifying offgas by cryocondensation, comprising:
a) at least partially determining a chemical composition of the offgas to be purified,
b) specifying a target temperature value on the basis of a result of step a),
c) controlling a temperature of the offgas to the target temperature value specified in step b).

## Description

The invention relates to a process and an apparatus for purifying offgas by cryocondensation.

It is known to purify offgas by cryocondensation. This especially allows volatile constituents to be removed from the offgas. This is achieved by cooling the offgas until the volatile constituents condense or even freeze and are thus removed from the offgas. Cryocondensation is also known as volatile organic compounds (VOC) recovery. Cryocondensation is one of the most environmentally friendly solutions for purifying offgas. Cryocondensation may also be used in cases in which for example combustion technologies or biological solutions reach their limits.

In cryocondensation the residual volume concentration of the volatile substances in the offgas depends on the temperature to which the offgas is cooled. The residual volume concentration is the remaining volume concentration of volatile substances after purification of the offgas. This volume concentration may be the sum of the respective volume concentrations of two or more volatile substances. A desired maximum residual volume concentration may therefore be observed by cooling the offgas to below a corresponding temperature. However, this temperature depends on the chemical composition of the offgas to be purified before cooling. Difficulties can therefore arise if the composition of the offgas varies. This is often the case because two or more processes are often connected to the same offgas plant.

In known processes for purifying offgas by cryocondensation the offgas is cooled to such an extent that the desired maximum residual volume concentration is observed for all chemical compositions of the offgas that are to be expected. A worst case is therefore assumed. However, this generally has the result that the offgas is cooled more than necessary. This is energetically inefficient.

In order to counter this it is known to manually adjust the target temperature when conditions change. However this is inconvenient and prone to errors.

It is an object of the present invention, proceeding from the described prior art, to provide a process and an apparatus for simple, reliable and more energy-efficient purification of offgas by cryocondensation.

These objects are achieved with the process and the apparatus according to the independent claims. Further advantageous embodiments are specified in the dependent claims. The features illustrated in the claims and in the description may be combined one another in any desired technically advantageous manner.

What is proposed according to the invention is a process for purifying offgas by cryocondensation. The process comprises:
a) at least partially determining a chemical composition of the offgas to be purified,
b) specifying a target temperature value on the basis of a result of step a),
c) controlling a temperature of the offgas to the target temperature value specified step b).

The process is used for purifying offgas. Offgas is to be understood as meaning a gas which results from a process as a byproduct. Offgas generally contains harmful substances. The offgas may be formed in a process arranged upstream of the present process. This process may be for example a reaction from the field of the chemical industry, the pharmaceutical industry or the recycling of materials. The origin of the offgas is irrelevant to the mode of operation of the described process. Volatile constituents may be removed from the offgas by cryocondensation. The offgas therefore preferably comprises volatile constituents, in particular volatile organic compounds.

The described process allows the offgas to be purified. The offgas is preferably in the form of a continuous offgas stream which is continuously treated as described. However, it is irrelevant to the mode of operation of the described process whether the offgas is in the form of an offgas stream or not.

The process comprises steps a) to c). Step b) proceeds on the basis of step a) and step c) proceeds on the basis of step b). The steps therefore have a temporal dependence. However, especially when the offgas is in the form of an offgas stream, steps a) to c) are preferably performed simultaneously. This is possible by performing step a) with one portion of the offgas while, upstream of the offgas stream, step c) is being performed with another portion of the offgas. The process may accordingly be performed continuously.

In step a) a chemical composition of the offgas to be purified is at least partially determined. The chemical composition of the offgas is to be understood as meaning the indication of the components forming the offgas as well as the proportion of each of the components in the offgas. The chemical composition may be expressed for example by reporting a respective volume concentration for each component of the offgas.

The chemical composition is at least partially determined in step a). A determination is partial when the knowledge of the chemical composition of the offgas gained is incomplete. The results of a partial determination of the chemical composition of the offgas may for example comprise respective indications of the volume concentration of some of the components of the offgas. The remaining components of the offgas can in this case be encompassed by the term "others". The chemical composition of the offgas can also be only partially determined in that one or more components of the offgas are only ascertained as being present without determining a quantitative indication such as a volume concentration. A component may be considered as being present in the offgas when the volume concentration of this component exceeds a particular threshold value. In a particularly simple embodiment a component is considered as being present in the offgas when this component is present in the offgas in a measurable amount. The threshold value in this case corresponds to the limit of detection. This embodiment is sufficient for many applications. Even better results can be achieved when the volume concentration of one or more components in the offgas is quantified. A component having a low volume concentration may generally be excluded from the controlling. This especially applies when the component having the lowest condensation temperature is already below 20 mg/m³.

Step a) preferably comprises performing a determination for at least one chemical substance, whether said substance is present in the offgas as a component or not. Alternatively or in addition, step a) preferably comprises determining a respective volume concentration for at least one component of the offgas.

The partial determination of the chemical composition is sufficient for the described process since it is not necessary for the mode of operation of this process to have precise knowledge of the volume concentration of every component of the offgas. However, the best results are achievable when knowledge of the chemical composition of the offgas is precise and complete. It is therefore preferable when step a) comprises complete determination of the chemical composition. However, the advantages described herein can also be achieved to a limited extent when the chemical composition of the offgas is only partially determined. For many applications such an approximate solution is sufficient.

The chemical composition can be determined with an analytical instrument, for example spectroscopically. The analytical instrument preferably comprises an electronic sensor. The analytical instrument is preferably configured for outputting an electronic measurement signal representing the chemical composition to the extent this has been determined with the analytical instrument. However, for the mode of operation of the described process the manner of determination of the chemical composition is immaterial.

In step a) the chemical composition of the offgas is at least partially determined to the extent that a volume concentration of volatile organic substances in the offgas is determined. Alternatively or in addition, a volume concentration is determined for at least one further component of the offgas. Especially water and organic substances such as ammonia (NH₃) are contemplated as such further components.

In step b) a target temperature value is determined on the basis of a result from step a). The result from step a) comprises indications that have been determined in the at least partial determination of the chemical composition of the offgas. The result from step a) may comprise for example the respective volume concentrations of two or more components of the offgas.

In particular the result from step a) may be used to determine a vapor pressure curve of the volatile constituents of the offgas. The temperature that the offgas must fall below to observe a desired maximum residual volume concentration of the volatile constituents or to observe respective desired maximum residual volume concentrations of two more volatile constituents can be read off the vapor pressure curve. The target temperature value can be specified accordingly.

The target temperature value is preferably specified to a value in the range between
- 200°C and -50°C, in particular between -160°C and -90°C.

In step c) a temperature of the offgas is controlled to the target temperature value specified in step b), in particular by cooling the offgas. The target temperature value specified in step b) is below the temperature of the offgas before step c). This does not require special mention since purification of offgas by cryocondensation is always carried out by cooling the offgas. Step (c) thus comprises cooling the offgas to the target temperature value. This is carried out in the context of a controlling. For said controlling the temperature of the offgas after the cooling may be measured as an actual value and compared with the target temperature value. When the actual value diverges from the target value a corresponding alteration of the cooling power may be undertaken.

The described process cools the offgas only as far as is necessary to observe the desired maximum residual volume concentration of volatile constituents. Since the target temperature value is specified on the basis of the chemical composition of the offgas, the offgas need not be cooled more than necessary. The design process is thus particularly energy-efficient.

In a further preferred embodiment of the process in step b) the target temperature value is specified on the basis of a predetermined assignment.

The predetermined assignment may contain as an input parameter an indication of a volume concentration of a component of the offgas or may contain as input parameters indications of respective volume concentrations of components of the offgas. The predetermined assignment has the target temperature value as the output parameter. The predetermined assignment may be in the form of a mathematical function. The predetermined assignment may be stored in a control means and thus predetermined.

In a further preferred embodiment of the process in step b) the target temperature value is specified such that a volume concentration of at least one volatile substance in the offgas is below a predetermined threshold when the temperature of the offgas is not more than the target temperature value.

If the offgas comprises two or more volatile substances the target temperature value is preferably specified in step b) such that a volume concentration of the volatile substances in the offgas is below a predetermined threshold when the temperature of the offgas is not more than the target temperature value. In this case the volume concentration of the volatile substances is the sum of the respective volume concentrations of two or more volatile substances, preferably all volatile substances, in the offgas.

Whether the volume concentration of the at least one volatile substance in the offgas is below a predetermined threshold when the temperature of the offgas is not more than the target temperature value may be determined by calculation. The target temperature value may therefore be calculated from the recited conditions in step b). The recited condition thus does not merely describe a result to be achieved but rather describes an input parameter for a mathematical calculation.

In a further preferred embodiment of the process in step c) the offgas is cooled with a smaller number of cooling stages when the target temperature value specified in step b) is above a threshold value than when the target temperature value specified in step b) is below the threshold value.

In step c) the offgas is preferably cooled with a cooling means comprising two or more cooling stages. Contemplated cooling stages especially include a heat exchanger. It is generally the case that the more cooling stages are used, the greater the extent to which the offgas can be cooled. If the offgas is cooled with two or more cooling stages the offgas is preferably successively cooled with these cooling stages. If the target temperature value determined in step b) is relatively low the offgas is cooled with two or more cooling stages. However, if the target temperature value is relatively high the use of fewer cooling stages or even of only a single cooling stage is sufficient. This is quantified on the basis of the threshold value. The threshold value may for example be stored in a control unit and thus predetermined.

To allow the offgas to be cooled to -160°C for example, a low temperature cooling stage is preferably employed. If the target temperature value is markedly higher, for example -90°C, the low temperature cooling stage is not necessary. If the low temperature cooling stage is not required it may be switched off to save energy.

It is particularly preferable when in step c) the offgas is cooled using precisely one cooling stage when the target temperature value specified in step b) is above the threshold value and when in step c) the offgas is cooled successively using two or more, in particular precisely two, cooling stages when the target temperature value specified in step b) is below the threshold value.

In a further preferred embodiment of the process in step c) the offgas is cooled with a cooling medium which is gaseous under standard conditions.

The cooling medium is preferably a cryogenic substance. The cooling medium is preferably nitrogen. The nitrogen may be provided as liquid nitrogen and evaporated by the described process. The cooling medium may generally be utilized for a further purpose after the process. For example gaseous nitrogen obtained may be utilized for generating a protective atmosphere for a process. The described process is particularly energy-efficient in such an embodiment.

In a further aspect of the invention an apparatus for purifying offgas by cryocondensation is proposed. The apparatus comprises:
- a cooling means,
- an analysis means for at least partially determining a chemical composition of offgas upstream of the cooling means,
- a temperature sensor for determining a temperature of the offgas downstream of the cooling means,
- a control means which is electronically connected to the cooling means, to the analysis means and to the temperature sensor and which is adapted for specifying a target temperature value on the basis of a signal output by the analysis means, comparing the target temperature value with an actual temperature value determined by the temperature sensor and outputting a control signal to the cooling means, with the result that a temperature of the offgas at the outlet of the cooling means is controlled to the target temperature.

The described advantages and features of the process are applicable and transferable to the apparatus, and vice versa. The apparatus is preferably adapted for operation according to the process. The process is preferably performed with the apparatus.

The offgas may be cooled with the cooling means by introducing the offgas into the inlet and discharging it from the outlet. The offgas may be cooled with the cooling means in step c) of the described process.

The cooling means may comprise one or more cooling stages. When the cooling stage comprises two or more cooling stages, these need not be arranged in a common housing. It is sufficient to have the functionality that the cooling stages can be traversed by the offgas, in particular successively. The cooling means preferably has an inlet and an outlet. The inlet and outlet of the cooling means are also defined only functionally and need not be formed by a particular component, for example in the form of a connection.

The analysis means preferably comprises an electronic sensor. The analysis means is preferably configured for outputting an electronic measurement signal representing the chemical composition to the extent this has been determined with the analysis means. The analysis means preferably comprises an electronic sensor. The analysis means allows at least partial determination of the chemical composition of the offgas upstream of the cooling means, in particular at the inlet of the cooling means. This may be effected by having the analysis means arranged at the inlet of the cooling means. However, the analysis means may also be arranged spaced apart from the inlet at a site at which the offgas has the same chemical composition as at the inlet of the cooling means. This may be for example in a feed conduit leading to the inlet.

The analysis means may be used to at least partially determine the chemical composition of the offgas to be purified in step a) of described process.

The control means may be used to specify the target temperature value in step b) of the described process on the basis of a signal output by the analysis means.

The temperature of the offgas in step c) of the described process is preferably controlled to the target temperature value specified in step b) with the control means and with the cooling means. The cooling means is used to manipulate the actual temperature value while the control means may be used to perform the actual-target comparison.

The actual value for the offgas downstream of the cooling means, in particular at the outlet of the cooling means, may be determined with the temperature sensor. This may be effected by having the temperature sensor arranged at the outlet of the cooling means. However, the temperature sensor may also be arranged spaced apart from the outlet at a site at which the offgas temperature is a measure for the temperature of the offgas at the outlet of the cooling means. This may be the case for example in a discharge conduit leading away from the outlet. It is true that it can generally be assumed that the temperature of the offgas changes with increasing distance from the outlet of the cooling means. However, this effect is predictable and is merely an offset that it is easy to handle.

The cooling means is preferably operated with a cooling medium which is gaseous under standard conditions. The apparatus preferably comprises a source for a cooling medium which is gaseous under standard conditions, in particular for nitrogen. The source for the cooling medium is preferably at least partially filled with the cooling medium. In this case the apparatus is not only suitable for use of such a cooling medium but in fact comprises this cooling medium.

In a preferred embodiment of the apparatus the cooling means comprises an inlet, an outlet and a plurality of cooling stages arranged between the inlet and the outlet, wherein the control means is adapted for outputting the control signal to the cooling means such that the offgas is cooled in the cooling means with a smaller number of cooling stages when the target temperature value specified is above a threshold value than when the target temperature value specified is below the threshold value.

The control means is preferably adapted for outputting the control signal to the cooling means such that the offgas is cooled in the cooling means using precisely one of the cooling stages when the target temperature value specified is above the threshold value and the offgas is cooled in the cooling means successively using two or more, in particular precisely two, of the cooling stages when the target temperature value specified is below the threshold value.

The invention will now be more particularly elucidated with reference to the figure. The figure shows a particularly preferred exemplary embodiment but the invention is not limited thereto. The figures and the relative sizes represented therein are only schematic. In the figures:

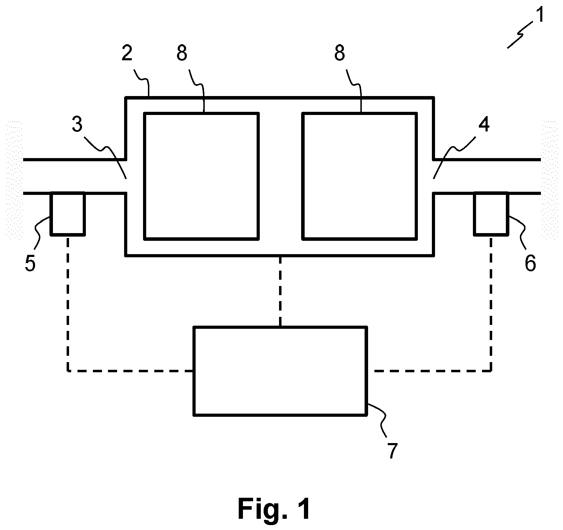

- Fig. 1:: shows an apparatus according to the invention for purifying offgas by cryocondensation.

Fig. 1 shows an apparatus 1 for purifying offgas by cryocondensation. The apparatus 1 comprises a cooling means 2 having an inlet 3 and an outlet 4. Arranged between the inlet 3 and the outlet 4 are two cooling stages 8 which are successively traversed by the offgas after it is introduced into the inlet 3 and before it exits from the outlet 4.

The apparatus 1 further comprises an analysis means 5 for at least partial determination of the chemical composition of the offgas at the inlet 3 of the cooling means 2. In addition the apparatus 1 comprises a temperature sensor 6 for determining a temperature of the offgas at the outlet 4 of the cooling means 2.

The apparatus 1 further comprises a control means 7 which is electronically connected to the cooling means 2, to the analysis unit 5 and to the temperature sensor 6. This is indicated by dashed lines. The control means 7 can receive appropriate signals from the analysis means 5 and from the temperature sensor 6 and output a control signal to the cooling means 2. The control means 7 is adapted for specifying a target temperature value on the basis of a signal transmitted by the analysis means 5, comparing the target temperature value with an actual value determined by the temperature sensor 6 and outputting a control signal to the cooling means 2, with the result that a temperature of the offgas at the outlet 4 of the cooling means 2 is controlled to the target temperature value, wherein the offgas is cooled in the cooling means 2 using only one of the two cooling stages 8 when the target temperature value specified is above a threshold value and the offgas is cooled in the cooling means 2 successively using both cooling stages 8 when the target temperature value specified is below the threshold value.

### List of reference symbols

- 1: Apparatus
- 2: Cooling means
- 3: Inlet
- 4: Outlet
- 5: Analysis means
- 6: Temperature sensor
- 7: Control means
- 8: Cooling stage

## Claims

1. Process for purifying offgas by cryocondensation, comprising:
a) at least partially determining a chemical composition of the offgas to be purified,
b) specifying a target temperature value on the basis of a result of step a),
c) controlling a temperature of the offgas to the target temperature value specified step b).

2. Process according to Claim 1, wherein in step b) the target temperature value is specified on the basis of a predetermined assignment.

3. Process according to either of the preceding claims, wherein in step b) the target temperature value is specified such that a volume concentration of at least one volatile substance in the offgas is below a predetermined threshold when the temperature of the offgas is not more than the target temperature value.

4. Process according to any of the preceding claims, wherein in step c) the offgas is cooled with a smaller number of cooling stages (8) when the target temperature value specified in step b) is above a threshold value than when the target temperature value specified in step b) is below the threshold value.

5. Process according to any of the preceding claims, wherein in step c) the offgas is cooled with a coolant which is gaseous under standard conditions.

6. Apparatus (1) for purifying offgas by cryocondensation, comprising:
- a cooling means (2),
- an analysis means (5) for at least partially determining a chemical composition of offgas upstream of the cooling means(2),
- a temperature sensor (6) for determining a temperature of the offgas downstream of the cooling means (2),
- a control means (7) which is electronically connected to the cooling means (2), to the analysis means (5) and to the temperature sensor (6) and which is adapted for specifying a target temperature value on the basis of a signal output by the analysis means (5), comparing the target temperature value with an actual temperature value determined by the temperature sensor (6) and outputting a control signal to the cooling means (2), with the result that a temperature of the offgas at the outlet (4) of the cooling means (2) is controlled to the target temperature.

7. Apparatus (1) according to claim 6, wherein the cooling means (2) comprises an inlet (3), an outlet (4) and a plurality of cooling stages (8) arranged between the inlet (3) and the outlet (4) and wherein the control means (7) is adapted for outputting the control signal to the cooling means (2) such that the offgas is cooled in the cooling means (2) with a smaller number of cooling stages (8) when the target temperature value specified is above a threshold value than when the target temperature value specified is below the threshold value.
